# EUROPÄISCHE PATENTSCHRIFT

(11) **EP 1 900 474 B1**
(45) Veröffentlichungstag und Bekanntmachung des Hinweises auf die Patenterteilung: **08.12.2010**
(21) Anmeldenummer: 07016892.7
(22) Anmeldetag: 29.08.2007
(51) Int. Cl.: B23P 19/06

(54) **Profilstabbearbeitungsvorrichtung**
Profile rod machining device
Dispositif de traitement de bâtons

(30) Priorität: 15.09.2006 DE 102006045845
(43) Veröffentlichungstag der Anmeldung: 19.03.2008
(73) Patentinhaber: elumatec GmbH, 75417 Mühlacker (DE)
(72) Erfinder: Hettler, Andreas, 75417 Mühlacker (DE); Lutz, Eugen, 75417 Mühlacker (DE)
(74) Vertreter: Patentanwälte Ruff, Wilhelm, Beier, Dauster & Partner

(56) Entgegenhaltungen:
- DE-A1- 3 825 144
- DE-A1- 10 301 237
- DE-U1- 29 918 907
- JP-A- 59 076 732

## Beschreibung

Die Erfindung betrifft eine Profilstabbearbeitungs-Vorrichtung mit einer Schraubereinheit, insbesondere zum Verschrauben von Armierungen an Profilstäben, entsprechend dem Oberbegriff des Anspruchs 1.

Profilstabbearbeitungs-Vorrichtungen mit einer Schraubereinheit, beispielsweise zum Verschrauben von Armierungen an Proffstäben, sind bekannt. Diese Schraubereinheiten weisen einen Arbeitskopf auf, mit dem die Schrauben eingedreht werden. Weiterhin sind die bekannten Schraubereinheiten mit einer Zuführung verbunden, beispielsweise einem Rüttler oder einem Magazin, von wo aus dem Arbeitskopf Schrauben zugeführt werden. Diese Schraubereinheiten sind in einem so genannten Bearbeitungszentrum angeordnet, in dem nacheinander mehrere Bearbeitungen an einem Profilstab vorgenommen werden. Um auf zwei gegenüberliegenden Seiten eines Profilstabs Schrauben einzubringen oder um beispielsweise die Ausrichtung eines Profilstabes relativ zu der Schraubereinheit bei der Zuführung des Profilstabes vernachlässigen zu können, müssen entweder zwei derartige Schraubereinheiten vorgesehen werden oder die Profilstäbe müssen gedreht werden.

In der JP 59-076 732 A ist eine automatische Schraubereinheit beschrieben. Diese Schraubereinheit ist um eine horizontal verlaufende Rotationsachse schwenkbar an einem Arm befestigt. Dieser Arm ist um eine vertikal verlaufende Rotationsachse schwenkbar mit einem weiteren Armstück verbunden. Dieses weitere Armstück ist seinerseits um eine vertikal verlaufende Rotationsachse schwenkbar mit einer Aufnahmevorrichtung verbunden. Diese Aufnahmevorrichtung ist ihrerseits um eine horizontal verlaufende Rotationsachse schwenkbar mit einem Fußteil verbunden, wobei diese Verbindung ebenfalls wiederum um eine vertikal verlaufende Rotationsachse schwenkbar ausgebildet ist.

In der DE 103 01 237 A1 ist eine Robotervorrichtung mit einer Roboterhand für Hochlastarbeit beschrieben. Darin ist an einer Stützsäule ein erster Arm in horizontaler Richtung bewegbar angeordnet. Der erste Arm dient als Aufnahme für eine Welle, die zum Einen rotierend gelagert ist, zum Anderen aber auch durch Expansion bzw. Kontraktion in Axialrichtung verlängert bzw. verkürzt werden kann. Mit dieser Welle steht eine Rotationsantriebseinheit in Verbindung, die einen Schrauberkopf aufweist. Die Rotationsantriebseinheit kann also mittels der Welle um eine vertikal verlaufende Achse rotiert werden, und ist immer im Wesentlichen senkrecht zu einem zu bearbeitenden Werkstück ausgerichtet.

Aufgabe der Erfindung ist es, eine Profilstabbearbeitungs-Vorrichtung mit einer Schraubereinheit zu schaffen, mit der auf einfache Weise in zwei gegenüberliegenden Seiten eines Profilstabes Schrauben eingebracht werden können und die kostengünstig ausführbar ist.

Gelöst wird diese Aufgabe durch eine Profilstabbearbeitungs-Vorrichtung mit den Merkmalen des Anspruchs 1. Vorteilhafte sowie bevorzugte Ausgestaltungen der Erfindung sind Gegenstand der weiteren Ansprüche und werden im Folgenden näher erläutert.

Erfindungsgemäß ist eine Profilstabbearbeitungs-Vorrichtung mit einer Schraubereinheit mit den Merkmalen des Anspruchs 1 vorgesehen.

Durch die erfindungsgemäße Anordnung wird erreicht, dass in einen Profilstab, in dem beispielsweise eine Armierung mittels selbstschneidender Schrauben auf zwei gegenüberliegenden Seiten des Profilsstabs mit dem Profilstab verschraubt werden soll, mit nur einem Schraubaggregat diese Schrauben auf beiden Seiten des Profilstabs angebracht werden können. Dazu kann die Schraubereinheit insbesondere so ausgebildet sein, dass das Schraubaggregat um den Profilstab verschwenkt werden kann, ohne dass der Profilstab aus dem Schwenkbereich des Schraubaggregats entfernt werden muss. Da auf eine zweite Schraubereinheit verzichtet werden kann, entsteht ein einfacher und damit günstiger Aufbau. Bei runden oder mehreckigen Profilen kann eine Verschwenkung um von 180° abweichende Winkel sinnvoll sein. Bei rechteckigen Profilen kann mittels Verschwenken um 90° eine Armierung von der Oberseite und einer Innenseite her verschraubt werden. Eine Schwenkachse, um die das Schraubaggregat geschwenkt wird, kann senkrecht zu einer Profillängsachse oder parallel hierzu liegen. Ein ganz wesentlicher Vorteil der Erfindung ist auch, dass durch das räumliche Trennen von Schraubaggregat und Bearbeitungsaggregat, beispielsweise zum Fräsen, durch Vorverlagern des Schraubaggregats in Bezug auf den Materialfluss, bei einem ersten Profil die Armierungen verschraubt werden können und gleichzeitig ein zweites Profil gefräst werden kann.

Die Schraubereinheit weist neben der Zuführvorrichtung und der Eindrehvorrichtung einen Antrieb auf, mittels dem die Eindrehvorrichtung zum Einschrauben der Schrauben in Rotation versetzt wird. Dieser Antrieb kann auf unterschiedliche Weisen ausgeführt sein, beispielsweise elektrisch oder pneumatisch. Weiterhin ist an der Schraubereinheit eine Aufnahme für so genannte Bits vorgesehen, wobei die Bits den Schraubenköpfen der verwendeten Schrauben angepasst sind. Die Aufnahme ist insbesondere so ausgebildet, dass die Bits austauschbar sind.

Mittels der Zuführvorrichtung werden die einzuschraubenden Schrauben der Eindrehvorrichtung zugeführt. Die Zuführvorrichtung kann beispielsweise eine Art Magazin sein, in dem eine bestimmte Anzahl von Schrauben gleich ausgerichtet aufgenommen ist. Das Magazin kann beispielsweise ein Papierstreifen, ein Gehäuse oder dergleichen sein. Die Zuführvorrichtung kann jedoch auch ein so genannter Rüttler sein, in den Schrauben ungeordnet eingefüllt werden. Mittels Rüttelbewegung sowie in dem Rüttler angeordneten Leit- und Sortiervorrichtungen werden die Schrauben dann gleich ausgerichtet. Die ausgerichteten Schrauben werden dann beispielsweise mittels eines Schlauchs oder dergleichen der Eindrehvorrichtung zugeführt. Durch die Verwendung eines Rüttlers entsteht eine quasi endlose Schrauben-Zuführmöglichkeit.

In der Profilstabbearbeitungs-Vorrichtung kann darüber hinaus eine Linearverschiebungs-Vorrichtung vorgesehen sein, mit der ein zu bearbeitender Profilstab in einer Richtung parallel zu seiner Mittellängsachse verschiebbar ist. Diese Linearverschiebungsvorrichtung ist vorteilhaft, da auf diese Weise der zu bearbeitende Profilstab an der Schraubereinheit entlang geführt werden kann, so dass die Schraubereinheit an unterschiedlichen Positionen entlang des Profilstabs Schrauben in den Profilstab eindrehen kann, ohne selbst linearverschiebbar angeordnet sein zu müssen. Wobei die Linearverschiebbarkeit des Schraubereinheit selbstverständlich als Alternative zur Linearverschiebbarkeit des Profilstabes erachtet werden kann.

In Weiterbildung der Erfindung ist die Schraubereinheit an einer ersten Profilstab-Bearbeitungsposition angeordnet und die weiteren Bearbeitungseinheiten sind an wenigstens einer zweiten, von der ersten Profilstab-Bearbeitungsposition räumlich getrennten Profilstab-Bearbeitungsposition des Profilstabs angeordnet.

Die erste und die zweite Profilstab-Bearbeitungsposition sind insbesondere in einer gemeinsamen Profilstabbearbeitungs-Vorrichtung vorgesehen, mit der verschiedene Bearbeitungsschritte an dem Profilstab vorgenommen werden können. Durch das räumliche Trennen der ersten Profilstab-Bearbeitungsposition, in der die Schraubereinheit zur Anwendung kommt, von der zweiten Profilstab-Bearbeitungsposition, in der weitere Bearbeitungsschritte vorgenommen werden, kann der Durchsatz einer Profilstabbearbeitungs-Vorrichtung vergrößert werden. Dies deshalb, da Bearbeitungsschritte wie beispielsweise Bohren und/oder Fräsen gleichzeitig mit dem Verschraubvorgang vorgenommen werden können. Vorteilhaft ist auch, dass durch das Trennen der Bearbeitungspositionen der Schraubereinheit ausreichend Zeit zur Verfügung steht, von der ersten in die zweite Bearbeitungsposition zu verschwenken. Dies deshalb, da die Bearbeitungsschritte der zweiten Profilstab-Bearbeitungsposition, beispielsweise beim Bohren und Fräsen, typischerweise insgesamt länger dauern als das Verschrauben in der ersten Profilstab-Bearbeitungsposition.

In Weiterbildung der Erfindung ist die Schwenkachse senkrecht zur Längsachse eines zu bearbeitenden Profilstabs und in einem Bereich einer Mittenebene des zu bearbeitenden Profilstabs liegend angeordnet.

Die Schraubereinheit kann hierzu so ausgebildet sein, dass die Schwenkachse, beispielsweise mittels verschiedenartiger Linearantriebe, in die entsprechenden Positionen überführt werden kann. Auf diese Weise ist für die Verschraubung eine Referenz vorgesehen, die unabhängig von der Schraubereinheit ist und lediglich von dem gerade bearbeiteten Profilstab abhängt. Die Reproduzierbarkeit einer Verschraubung wird dadurch deutlich erhöht beziehungsweise deren Erreichbarkeit deutlich vereinfacht.

In Weiterbildung der Erfindung ist das Schraubaggregat drehfest mit einem Zahnrad verbunden, das mit einer verschiebbar angeordneten Zahnstange kämmt. Ein Pneumatikzylinder ist zum Verschieben der Zahnstange vorgesehen.

Mittels des Zahnrades, mit dem das Schraubaggregat drehfest verbunden ist und das mit einer Zahnstange kämmt, ist die Schwenkbewegung des Schraubaggregats realisiert. Die Zahnstange wird in dieser Anordnung mittels des Pneumatikzylinders linear bewegt und erzeugt so eine Rotationsbewegung des Zahnrades. Das Vorsehen eines Zahnrades, das mit der Zahnstange kämmt, ist insbesondere deshalb vorteilhaft, da mittels eines verzahnten Getriebes eine sehr einfach und dennoch sehr präzise Rotationsbewegungen, insbesondere ohne Schlupf, übertragen werden können. Dennoch sind alternative Anordnungen zur Erzeugung der Schwenkbewegung im Rahmen der Erfindung ebenfalls denkbar, beispielsweise ein Riemenantrieb oder eine Art Kurbelwelle mit einer Pleuelstange.

In Weiterbildung der Erfindung sind Anschläge zum Definieren der ersten und der zweiten Stellung des Schraubaggregats vorgesehen, wobei wenigstens ein hydraulischer Stoßdämpfer mit den Anschlägen zusammenwirkt.

Durch das Vorsehen der Anschläge kann die Schwenkbewegung, insbesondere deren Endpositionen, weniger fein abgestimmt sein, da die Endpositionen ja durch die Anschläge definiert sind. Der wenigstens eine hydraulische Stoßdämpfer wirkt in dieser Anordnung als Puffer, so dass eine schnelle Schwenkbewegung des Schraubaggregats sanft abgebremst werden kann und eventuelle Vibrationen der Profilstabbearbeitungs-Vorrichtung nicht an die Schraubereinheit weiter gegeben werden. Anstatt des hydraulischen Stoßdämpfers kann auch ein pneumatischer Stoßdämpfer oder beispielsweise eine Federanordnung oder dergleichen vorgesehen sein.

Weitere Vorteile und Merkmale der Erfindung ergeben sich aus den Ansprüchen und der nachfolgenden Beschreibung eines Ausführungsbeispiels der Erfindung, das anhand der Zeichnungen dargestellt ist. In den schematischen Zeichnungen zeigen:
- Fig.1: eine Übersicht einer Profilstabbearbeitungs-Vorrichtung mit einer erfindungsgemäßen Schraubereinheit,
- Fig.2: eine Seitenansicht einer erfindungsgemäßen Schraubereinheit gemäß der Einzelheit II in Fig.1 in einer ersten Bearbeitungsposition,
- Fig.3: eine Draufsicht auf die Schraubereinheit in Fig.2, und
- Fig.4: eine Seitenansicht der erfindungsgemäßen Schraubereinheit in Fig.2 in einer zweiten Bearbeitungsposition.

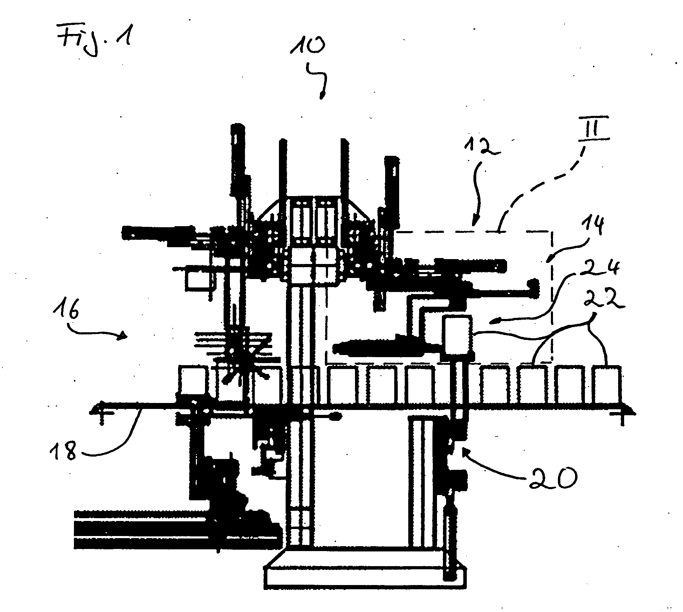

In Fig.1 ist eine Profilstabbearbeitungs-Vorrichtung 10 mit einer ersten Bearbeitungseinheit 12, die als erfindungsgemäße Schraubereinheit 14 ausgebildet ist, und mit einer zweiten Bearbeitungseinheit 16 dargestellt, in der beispielsweise nicht dargestellte Bohr-, Fräs-, Säge- und/oder Schleifvorrichtungen oder dergleichen vorgesehen sein können. Die Profilstabbearbeitungs-Vorrichtung 10 weist darüber hinaus eine Materialtransportbahn 18 mit einer Hebevorrichtung 20 für das Positionieren der Profilstäbe 22 in einem Eingriffsbereich 24 der Schraubereinheit 14 auf.

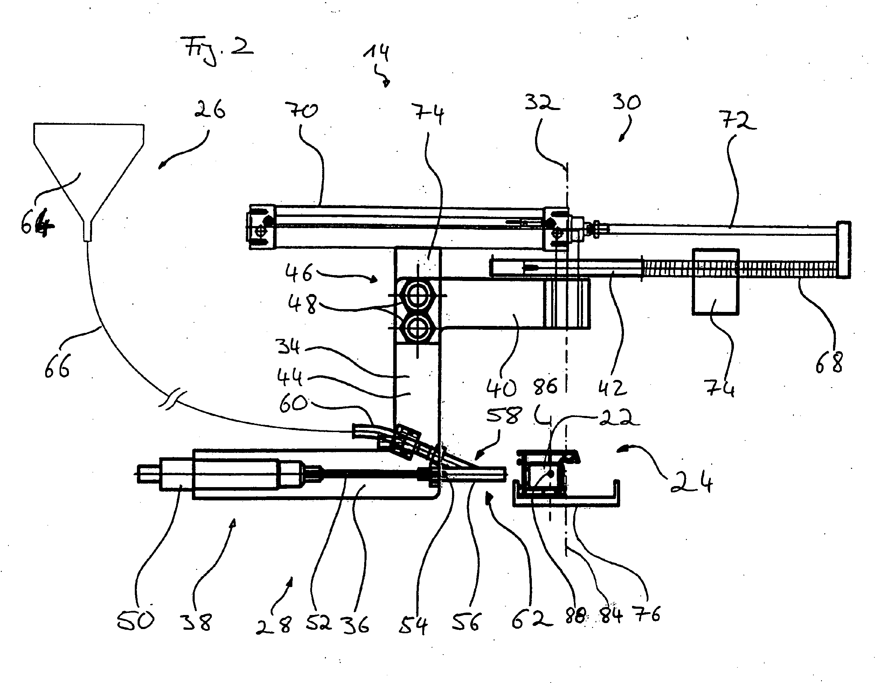

Die in Fig.2 dargestellte Seitenansicht der Schraubereinheit 14 in einer ersten Bearbeitungsposition zeigt eine Zuführeinheit 26, ein Schraubaggregat 28 sowie eine Schwenkvorrichtung 30 zum Verschwenken des Schraubaggregats 28 um eine Schwenkachse 32 auf. Das Schraubaggregat 28 weist einen stufenförmig abgewinkelten Träger 34 auf, der an einem ersten Arm 36 mit einer Eindrehvorrichtung 38 und an einem zweiten Arm 40 mit einem Zahnrad 42 verbunden ist, wobei der erste Arm 36 und der zweite Arm 40 in entgegengesetzte Richtungen weisen. An einem Mittelteil 44 des Trägers 34 sind in einem Bereich 46, der dem Arm 40 zugewandt ist, in Fig.2 untereinander zwei identisch ausgebildete hydraulische Stoßdämpfer 48 angeordnet, wobei die Mittellängsachsen der hydraulische Stoßdämpfer 48 senkrecht zu einer durch den Träger 34 definierten Ebene ausgerichtet angeordnet sind und die Wirkrichtungen der hydraulischen Stoßdämpfer 48 zueinander entgegengesetzt verlaufen.

Die Eindrehvorrichtung 38 weist einen Antrieb 50 auf, der mit einer Achse 52 verbunden ist, mit der ein so genanntes Bit 54 in Eingriff steht. Das Bit 54 ist korrespondierend zu einem Schraubenkopf einer zu verschraubenden Schraube ausgebildet und ist in einer Hülse 56 mit einem Y-Stück 58 geführt. Die Hülse 56 bildet mit dem Y-Stück 58 und einer Übergabeleitung 60 eine Schraubenpositionier-Vorrichtung 62, mit dem gleich ausgerichtete, jedoch nicht dargestellte selbstschneidende Schrauben vor dem Bit 54 positioniert werden, in Fig.2 also rechts von dem Bit 54. Die Schraubenpositionier-Vorrichtung 62 steht mittels der Übergabeleitung 60 mit einer Zuführeinheit 26 in Verbindung, die als so genannter Rüttler 64 mit einer Zuführleitung 66 ausgebildet ist, die mit der Übergabeleitung 60 verbunden ist.

Die Schwenkvorrichtung 30, die an der in Fig.2 nicht dargestellten Profilstabbearbeitungs-Vorrichtung rotations- und ortsfest fixiert ist, weist eine Zahnstange 68 auf, die mit dem Zahnrad 42 kämmt und die mit einer Kolbenstange 72 eines Pneumatikzylinders 70 verbunden ist.

An der in Fig.2 nicht dargestellten Profilstabbearbeitungs-Vorrichtung sind schließlich noch Anschläge 74 befestigt, an denen jeweils je nach Verschwenkung des Schraubaggregates 28 einer der hydraulischen Stoßdämpfer 48 anliegt.

Die Schraubereinheit 14 wird dazu verwendet, Schrauben in Profilstäbe 22 einzubringen, die dazu auf einer Aufnahme 76 liegend, die mit der Hebevorrichtung 20 aus Fig.1 in Eingriff steht, mittels der Hebevorrichtung in ein Eingriffsbereich 24 der Schraubereinheit 14 gehoben wird.

Die Aufnahme 76 ist so angeordnet, dass die Schwenkachse 32 auf einer Mittelebene 84 der Aufnahme 76 liegt. Parallel zur, jedoch nicht zwingend deckungsgleich mit der Mittelebene 84 der Aufnahme 76 verläuft eine Mittelebene 86 des Profilstabs 22, wobei auf der Mittelebene 86 des Profilstabs 22 eine Mittellängsachse 88 des Profilstabs 22 liegt. In Fig.2 verläuft die Mittellängsachse 86 des Profilstabs 22 senkrecht zu Betrachtungsebene der Fig.2.

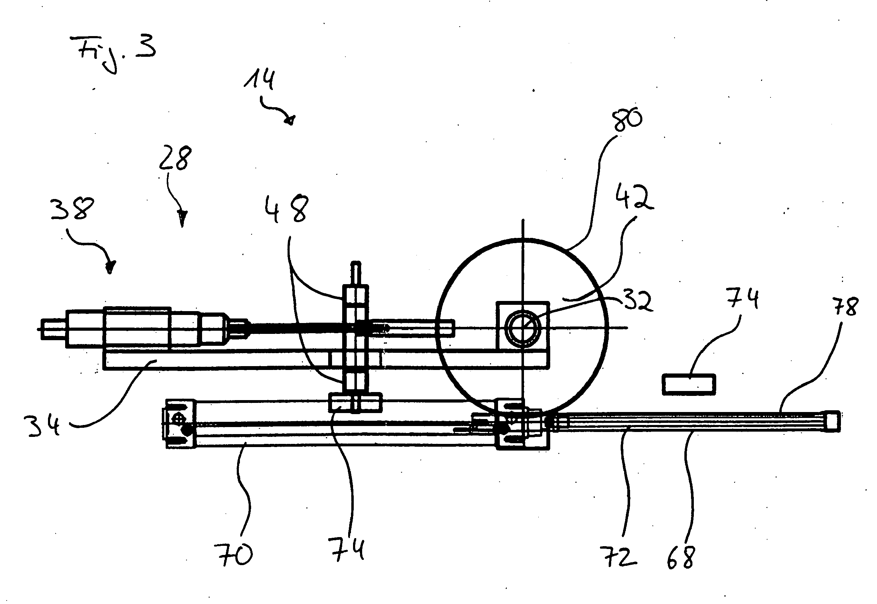

Aus der Draufsicht der Schraubereinheit 14 gemäß Fig.3 wird der räumliche Aufbau der Schraubereinheit 14 ersichtlich. Der orts- und rotationsfest an der in Fig.3 nicht dargestellten Profilstabbearbeitungs-Vorrichtung montierte Pneumatikzylinder 70 ist mittels der Kolbenstange 72 mit der Zahnstange 68 verbunden, die mit ihrer Verzahnung 78 mit einer Verzahnung 80 dem Zahnrad 42 kämmt. Die Kolbenstange 72 des Pneumatikzylinders 70 ist in Fig.3 in einem ausgefahrenen Zustand dargestellt. Mit dem Zahnrad 42 ist der Träger 34 verbunden, an dem die Eindrehvorrichtung 38 angeordnet ist. Das Schraubaggregat 28 ist um eine Schwenkachse 32 schwenkbar, wobei die Schwenkachse 32 gleichzeitig die Mittelachse des Zahnrades 42 ist. Aus Fig.3 ist insbesondere ersichtlich, dass die beiden hydraulischen Stoßdämpfer 48 in entgegenbesetze Richtungen weisen und mit den Anschlägen 74 korrespondierend angeordnet sind, wobei die Anschläge 74 mit der Schwenkachse 32 ein gleichschenkliges Dreieck definieren.

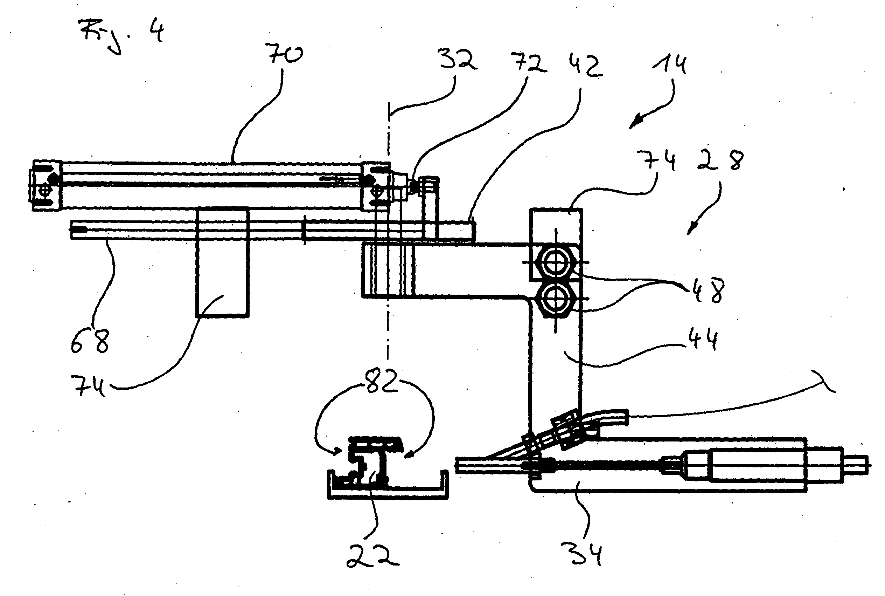

Das Schraubaggregat 28 der Schraubereinheit 14 der Fig.2 ist in der Darstellung gemäß Fig.4 um 180° um die Schwenkachse 32 verschwenkt.

Um diese Verschwenkung des Schraubaggregats 28 zu erreichen, wird die Kolbenstange 72 des Pneumatikzylinders 70 eingezogen, so dass die Zahnstange 68 das Zahnrad 42 und somit das Schraubaggregat 28 in eine Rotationsbewegung versetzt. Durch das Verschwenken des Schraubaggregates 28 ist es möglich, mit nur einem Schraubaggregat 28 einen Profilstab 22 auf zwei sich gegenüberliegenden Seiten 82 mit nicht dargestellten Schrauben zu versehen, beispielsweise um in dem Profilstab 22 nicht dargestellte Armierungen zu verschrauben. Um die gegenüberliegenden und aufeinander zu weisenden Einschraubrichtungen des Schraubaggregates 28 exakt aufeinander auszurichten, sind die hydraulischen Stoßdämpfer 48 vorgesehen, die je nach Ausrichtung des Schraubaggregates 28 mit den Anschlägen 74 zusammenwirken. Da die hydraulischen Stoßdämpfer 48 an dem Mittelteil 44 des Trägers 34 untereinander angeordnet sind, sind die Anschläge 74 unterschiedlich lang ausgebildet.

## Patentansprüche

1. Profilstabbearbeitungs-Vorrichtung mit einer Schraubereinheit (14), insbesondere zum Verschrauben von Armierungen an Profilstäben (22), wobei die Schraubereinheit (14) wenigstens eine Zuführvorrichtung (26) und ein Schraubaggregat (28) mit einem Träger (34) und einer Eindrehvorrichtung (38) für Schrauben aufweist, **dadurch gekennzeichnet, dass** der Träger (34) des Schraubaggregats (28), an dem die Eindrehvorrichtung (38) befestigt ist, starr ausgebildet und um eine Schwenkachse (32) schwenkbar ist, wobei die Schwenkachse (32) relativ zu einer Aufnahme (76) für zu bearbeitende Profilstäbe (22) unbeweglich ist und auf einer Mittelebene (84) der Aufnahme (76) für zu bearbeitende Profilstäbe (22) liegt und wobei das Schraubaggregat (28) so ausgebildet und die Schwenkachse (32) so angeordnet ist, dass das Schraubaggregat (28) der Schraubereinheit (14) mittels einer Schwenkbewegung des starren Trägers (34) um die Schwenkachse (32) ausgehend von einer ersten, im wesentlichen senkrecht zu einer Längsachse (88) eines zu bearbeitenden Profilstabs (22) angeordneten Stellung mit einer ersten, im Wesentlichen senkrecht zur Längsachse (88) des zu bearbeitenden Profilstabs (22) liegenden Einschraubrichtung des Schraubaggregates (28) um einen vordefinierten Winkel, insbesondere 180°, in eine zweite, ebenfalls im wesentlichen senkrecht zu dem zu bearbeitenden Profilstab (22) angeordnete Stellung mit einer zweiten, von der ersten verschiedenen und im Wesentlichen senkrecht zur Längsachse (88) des zu bearbeitenden Profilstabs (22) liegenden Einschraubrichtung des Schraubaggregates (28) schwenkbar angeordnet ist.

2. Profilstabbearbeitungs-Vorrichtung nach Anspruch 1 mit weiteren Bearbeitungseinheiten (12, 16), **dadurch gekennzeichnet, dass** die Schraubereinheit (14) an einer ersten Profilstab-Bearbeitungsposition (12) angeordnet ist und die weiteren Bearbeitungseinheiten (16) an wenigstens einer zweiten, von der ersten Profilstab-Bearbeitungsposition (12) räumlich getrennten Profilstab-Bearbeitungsposition (14) des Profilstabs (22) angeordnet sind.

3. Profilstabbearbeitungs-Vorrichtung nach Anspruch 1 oder 2, **dadurch gekennzeichnet, dass** die Schwenkachse (32) senkrecht zur Längsachse (88) eines zu bearbeitenden Profilstabs (22) und in einem Bereich einer Mittenebene (86) des zu bearbeitenden Profilstabs (22) liegend angeordnet ist.

4. Profilstabbearbeitungs-Vorrichtung nach wenigstens einem der vorstehenden Ansprüche, **dadurch gekennzeichnet, dass** das Schraubaggregat (28) drehfest mit einem Zahnrad (42) verbunden ist, das mit einer verschiebbar angeordneten Zahnstange (68) kämmt.

5. Profilstabbearbeitungs-Vorrichtung nach Anspruch 4, **dadurch gekennzeichnet, dass** ein Linearantrieb, insbesondere ein Pneumatikzylinder (70), zum Verschieben der Zahnstange (68) vorgesehen ist.

6. Profilstabbearbeitungs-Vorrichtung nach Anspruch 4 oder 5, **dadurch gekennzeichnet, dass** Anschläge (74) zum Definieren der ersten und der zweiten Stellung des Schraubaggregats (28) vorgesehen sind, wobei wenigstens ein hydraulischer Stoßdämpfer (48) mit den Anschlägen (74) zusammenwirkt.

## Claims

1. Profile rod machining device having a screwdriver unit (14), in particular for screwing reinforcements to profile rods (22), where the screwdriver unit (14) has at least one feed device (26) and one screwdriving element (28) with a support (34) and a screw-in device (38) for screws, **characterized in that** the support (34) of the screwdriving element (28) to which the screw-in device (38) is fastened is designed rigid and swivellable about a swivel axis (32), where the swivel axis (32) is immobile relative to a receptacle (76) for profile rods (22) to be machined and is on a central plane (84) of the receptacle (76) for profile rods (22) to be machined and where the screwdriving element (28) is so designed and the swivel axis (32) so arranged that the screwdriving element (28) of the screwdriver unit (14) is arranged swivellable, by means of a swivel movement of the rigid support (34) about the swivel axis (32), by a predefined angle, in particular 180°, from a first position arranged substantially vertically to a longitudinal axis (88) of a profile rod (22) to be machined with a first screw-in direction of the screwdriving element (28) substantially vertical to the longitudinal axis (88) of the profile rod to be machined, into a second position also arranged substantially vertical to the profile rod (22) to be machined with a second screw-in direction of the screwdriving element (28) differing from the first and substantially vertical to the longitudinal axis (88) of the profile rod (22) to be machined.

2. Profile rod machining device according to Claim 1 with further machining units (12, 16), **characterized in that** the screwdriver unit (14) is arranged on a first profile rod machining position (12) and the further machining units (16) are arranged on at least one second profile rod machining position (14) of the profile rod (22) spatially separated from the first profile rod machining position (12).

3. Profile rod machining device according to Claim 1 or 2, **characterized in that** the swivel axis (32) is arranged vertical to the longitudinal axis (88) of a profile rod (22) to be machined and inside an area of a central plane (86) of the profile rod (22) to be machined.

4. Profile rod machining device according to at least one of the preceding claims, **characterized in that** the screwdriving element (28) is connected in non-rotating manner to a gear wheel (42) engaging with a movably arranged rack (68).

5. Profile rod machining device according to Claim 4, **characterized in that** a linear drive, in particular a pneumatic cylinder (70) is provided for movement of the rack (68).

6. Profile rod machining device according to one Claim 4 or 5, **characterized in that** stops (74) are provided for defining the first and the second position of the screwdriving element (28), where at least one hydraulic shock absorber (48) interacts with the stops (74).

## Revendications

1. Dispositif de traitement de bâtons avec une unité de vissage (14), en particulier pour visser des ferrures sur des bâtons (22), dans lequel l'unité de vissage (14) présente au moins un dispositif d'alimentation (26) et un organe de vissage (28) avec un support (34) et un dispositif de pose de vis (38), **caractérisé en ce que** le support (34) de l'organe de vissage (28) sur lequel est fixé le dispositif de pose de vis (38) est rigide et pivotant autour d'un axe de pivotement (32), sachant que l'axe de pivotement (32) est immobile par rapport à un logement (76) pour les bâtons à traiter (22) et se situe dans un plan médian (84) du logement (76) pour les bâtons à traiter (22), et que l'organe de vissage (28) est conçu et l'axe de pivotement (32) est placé de manière telle que l'organe de vissage (28) de l'unité de vissage (14) peut être tourné suivant un angle prédéfini, en particulier 180°, par un mouvement pivotant du support rigide (34) autour de l'axe de pivotement (32) en partant d'une première position quasiment perpendiculaire à un axe longitudinal (88) d'un bâton à traiter (22) avec une première direction de vissage de l'organe de vissage (28) quasiment perpendiculaire à un axe longitudinal (88) du bâton à traiter (22), pour arriver dans une deuxième position également quasiment perpendiculaire au bâton à traiter (22) avec une deuxième direction de vissage de l'organe de vissage (28), distincte de la première et quasiment perpendiculaire à l'axe longitudinal (88) du bâton à traiter (22).

2. Dispositif de traitement de bâtons selon la revendication 1 avec des unités de traitement supplémentaires (12, 16), **caractérisé en ce que** l'unité de vissage (14) est placée sur une première position de traitement de bâtons (12) et que les unités de traitement supplémentaires (16) sont placées sur au moins une deuxième position de traitement (14) du bâton (22) distincte dans l'espace de la première position de traitement de bâtons (12).

3. Dispositif de traitement de bâtons selon la revendication 1 ou 2, **caractérisé en ce que** l'axe de pivotement (32) est perpendiculaire à l'axe longitudinal (88) d'un bâton à traiter (22) et situé dans une zone d'un plan médian (86) du bâton à traiter (22).

4. Dispositif de traitement de bâtons selon au moins une des revendications précédentes, **caractérisé en ce que** l'organe de vissage (28) est lié en rotation à une roue dentée (42) qui s'engrène dans une crémaillère (68) mobile.

5. Dispositif de traitement de bâtons selon la revendication 4, **caractérisé en ce qu'**est prévue un entraînement linéaire, en particulier un vérin pneumatique (70) pour déplacer la crémaillère (68).

6. Dispositif de traitement de bâtons selon la revendication 4 ou 5, **caractérisé en ce que** des butées (74) pour définir la première et la deuxième positions de l'organe de vissage (28), sachant qu'au moins un amortisseur hydraulique (48) agit conjointement avec les butées (74).
